(19) Europäisches Patentamt
European Patent Office
Office européen des brevets

(11) **EP 4 258 524 A1**

(12) **EUROPEAN PATENT APPLICATION**
published in accordance with Art. 153(4) EPC

(43) Date of publication:
**11.10.2023 Bulletin 2023/41**

(21) Application number: **21903375.0**

(22) Date of filing: **06.12.2021**

(51) International Patent Classification (IPC):
**H02K 19/10** (2006.01)    **B60L 15/20** (2006.01)
**H02K 1/2706** (2022.01)

(52) Cooperative Patent Classification (CPC):
**B60L 15/20; H02K 1/2706; H02K 19/10;**
**Y02T 10/72**

(86) International application number:
**PCT/JP2021/044779**

(87) International publication number:
**WO 2022/124275 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 JP 2020202611**

(71) Applicant: **Aichi Steel Corporation**
**Tokai-shi, Aichi 476-8666 (JP)**

(72) Inventors:
• **WATARAI, Aki**
  **Tokai-shi, Aichi 476-8666 (JP)**

• **HIRANO, Hiroaki**
  **Tokai-shi, Aichi 476-8666 (JP)**
• **KAYANO, Masahiro**
  **Tokai-shi, Aichi 476-8666 (JP)**
• **FUJIMAKI, Tadashi**
  **Tokai-shi, Aichi 476-8666 (JP)**
• **KIM, Choongsik**
  **Tokai-shi, Aichi 476-8666 (JP)**
• **WATANABE, Hayato**
  **Tokai-shi, Aichi 476-8666 (JP)**
• **ITO, Kazunori**
  **Tokai-shi, Aichi 476-8666 (JP)**
• **ISHIDA, Kazuya**
  **Tokai-shi, Aichi 476-8666 (JP)**

(74) Representative: **TBK**
**Bavariaring 4-6**
**80336 München (DE)**

(54) **GEARED MOTOR FOR ELECTRICALLY DRIVEN MOBILE OBJECT**

(57)     [Object] To reduce the amount of a rare earth element used in a magnet-embedded reluctance motor without lowering the performance thereof.

[Solution] A geared motor includes a synchronous reluctance motor whose maximum rotational speed is 20000 rpm to 45000 rpm and in which rare earth bonded magnets are embedded in a rotor, and a speed reducer which reduces the rotational speed of the synchronous reluctance motor to a rotational speed in a usage range while increasing torque to a predetermined range. When a radius of the rotor is represented by R (cm) and a length of the rotor in an axial direction is represented by L (cm), the rotor has a size which satisfies conditions of $2 \text{ cm} \le R \le 6 \text{ cm}$ and $2 \text{ cm} \le L \le 25 \text{ cm}$.

FIG. 1

EP 4 258 524 A1

**Description**

TECHNICAL FIELD

The present invention relates to a geared motor for an electrically driven mobile object in which the entirety or part of propulsion power is drive power produced by a motor. In particular, the present invention relates to a geared motor for an electrically driven mobile object, such as an electric vehicle (BEV) in which only an electric motor is used as a drive source, a hybrid electric vehicle (HV) in which propulsion power produced by a motor is used in addition to propulsion power produced by an internal combustion engine, and a fuel cell electric vehicle (FCV) in which propulsion power is produced by a motor which rotates by using electric power derived from fuel.

BACKGROUND ART

Heretofore, a synchronous reluctance motor that uses ferrite magnets has been known as shown in Patent Document 1. Also, an interior permanent magnet synchronous motor (IPMSM) in which rare earth sintered magnets are embedded in a rotor has been known. However, rare earth elements are scarce resources. In particular, dysprosium (Dy) necessary for improvement of performances such as impartment of heat resistance is precious and is locally present in different regions of the earth, which has raised a problem associated with stable supply. In order to overcome this problem, there has been proposed a permanent magnet assisted synchronous reluctance motor (PMA-SynRM) in which, instead of rare earth sintered magnets requiring a large amount of a raw material, rare earth bonded magnets are embedded in a rotor as shown in Non-patent documents 1 and 2.
Also, there has been demand for realization of a high-efficient, high-output(power) motor which uses less neodymium (Nd) and which uses less or does not use heavy rare earth elements, including dysprosium (Dy), and the scientific and technological policy of Japan has set a development goal for such a high-efficient, high-output motor.

PRIOR ART DOCUMENTS

PATENT DOCUMENT

Patent Document 1: JP2011-83066A

NON-PATENT DOCUMENTS

Non-patent Document 1: Marika Kobayashi et al., "Basic Study of PMA SynRM with Rare Earth Bonded Magnets for Automotive Drive" 2017 Kansai-section Joint Convention of Institutes of Electrical Engineering, pp. 110 - 111.
Non-patent Document 2: Marika Kobayashi et al., "Basic Study of PMA SynRM with Bonded Magnets for Traction Applications" The 2018 International Power Electronics Conference, pp. 2802 - 2807, 2018.

SUMMARY OF THE INVENTION

PROBLEM TO BE SOLVED BY THE INVENTION

In Patent Document 1, instead of precious rare earth elements, ferrite is used. However, ferrite is easily demagnetized by a magnetic field produced by armature current. Therefore, Patent Document 1 proposes a structure for effectively preventing demagnetization. Also, when rare earth sintered magnets are used, in order to reduce magnetic fluxes produced by the magnets for the purpose of realizing high rotational speed, it is necessary to make the rare earth sintered magnets very thin. However, there is a limit to how thin the magnets can be made. Therefore, in the case where rare earth sintered magnets are used in a motor, it is almost impossible to increase its rotational speed to 20000 rpm or higher.
Meanwhile, in Non-patent Documents 1 and 2, rare earth bonded magnets are used as embedded magnets of a rotor of a motor. A maximum output of 75.6 kW to 92.7 kW is attained at 5000 rpm. Also, its maximum rotational speed is 17000 rpm, and its output decreases from 75.6 kW (the maximum output) to 44.5 kW at the maximum rotational speed.
As described above, in Non-patent Documents 1 and 2, rare earth bonded magnets are used in a magnet-embedded-type reluctance motor. However, the magnet-embedded-type reluctance motor fails to achieve a rotational speed of 17000 rpm or higher. Also, no studies at all have been conducted on the relation between the maximum rotational speed or the maximum output and the area of an outer circumferential surface which is optimal for the maximum rotational speed and the maximum output; i.e., the optimal amount of rare earth bonded magnets used in the rotor. Accordingly, Non-patent Documents 1 and 2 do not include a viewpoint of minimizing the amount of rare earth elements used in a motor, while maintaining the high performance of the motor.

In view of the above, the present inventors carried out studies while setting a goal of minimizing the amount of rare earth bonded magnets used in a motor without impairing the performance of the motor. As a result, the present inventors concluded that it is necessary to reduce the side area of the rotor as much as possible while maintaining a desired output. The present inventors has finally conceived a new idea of reducing the area of the outer circumferential surface of the rotor of a motor in order to achieve a maximum rotational speed of 20000 rpm to 45000 rpm, which has not conventionally been achieved by a high output motor whose output is 25 kW or greater, thereby reducing the amount of rare earth bonded magnets as much as possible, and increasing torque which decreases at high rotational speed by using a speed reduction gear, whereby torque in a usage range is obtained, and thus the motor can be used as a drive source of an electric automobile.

An object of the present invention is to realize a drive motor of an electric automobile which uses a reduced amount of rare earth bonded magnets while maintaining the performance of the motor as much as possible.

MEANS FOR SOLVING THE PROBLEMS

The present invention is a geared motor for an electrically driven mobile object. The geared motor is adapted to provide propulsion power to an electric automobile. The geared motor comprises a synchronous reluctance motor whose maximum rotational speed is 20000 rpm to 45000 rpm and in which rare earth bonded magnets are embedded in a rotor, and a speed reducer which reduces the rotational speed of the synchronous reluctance motor to a rotational speed in a usage range while increasing torque to a predetermined range.

In the present invention, the electrically driven mobile object may also be referred to as simply an electric automobile. The "electric automobile" is a concept including a battery electric vehicle (BEV) in which only an electric motor using electric power stored in a battery is used as a drive source, a hybrid vehicle (HV) in which propulsion power produced by an electric motor is used in addition to propulsion power produced by an internal combustion engine, and a fuel cell vehicle (FCV) in which electric power is generated from fuel in a tank and is supplied to a motor serving as a drive source. In short, an automobile in which propulsion power is obtained by using an electric motor is defined as an electric automobile.

In the present invention, the maximum rotational speed may be in a range of 25000 rpm to 45000 rpm, in a range of 30000 rpm to 45000 rpm, or in a range of 32000 rpm to 45000 rpm. Further desirably, the maximum rotational speed may be 34000 rpm to 45000 rpm.

In the present invention, when a radius of the rotor is represented by R (cm) and a length of the rotor in an axial direction is represented by L (cm), the rotor desirably has a size which satisfies conditions of $2 \text{ cm} \leq R \leq 6 \text{ cm}$ and $2 \text{ cm} \leq L \leq 25 \text{ cm}$. When the length L is greater than 25 cm, the axis of the rotor may wave. Therefore, setting the length L to be greater than 25 cm is not realistic. Furthermore, the radius R and the length L may be set to satisfy conditions of $4 \text{ cm} \leq R \leq 6 \text{ cm}$ and $2 \text{ cm} \leq L \leq 18 \text{ cm}$. When the radius R is greater than 6 cm, the size of the motor may become excessively large, which is not desired from the viewpoint of an installation space of the motor.

Also, when a maximum rotational speed of the synchronous reluctance motor is represented by n (rpm), a maximum output of the synchronous reluctance motor is represented by P (W), a radius of the rotor is represented by R (cm), a length of the rotor in an axial direction is represented by L (cm), and a side area of the rotor is represented by S (cm$^2$) and obtained by an equation of $S = 2\pi RL$, the rotor desirably has a radius R and a length L, which provide a side area within a range of 0.7S to 1.1S, where S satisfies the following equation:

$$S = kP/n,$$

where k (cm$^2$ /W min) is a constant of proportionality and satisfies a condition of $120 \text{ cm}^2/\text{W min} \leq k \leq 160 \text{ cm}^2/\text{W min}$.

The value of k changes depending on the residual magnetic flux density of the rare earth bonded magnets, the shape of each magnet, the arrangement of the plurality of magnets, the shape of each of slits which separate adjacent magnets, the permeability and resistance of a magnetic circuit, the arrangement of armature coils, the positional relation between the magnets and the coils, the magnitude of armature current, etc. The value of k can be rendered small by optimizing these factors. Namely, even when the maximum output is large or the maximum rotational speed is low, the side area can be reduced by rendering the value of k smaller. The range of k is set from this point of view.

As to the side area which determines the radius R and the length L, the smaller the side area S, the greater the degree to which the amount of a rare earth element to be used can be reduced. Although the output(power) and the torque can be increased by increasing the side area S, the amount of the rare earth element to be used increases.

Therefore, the upper limit is determined as described above. The range of the side area S is determined by adding predetermined margins to the range of the side area S obtained, in accordance with the above-described equation, from the maximum output P, the maximum rotational speed n, and an arbitrary value of k which satisfies conditions of 120 cm$^2$/W min ≤ k ≤ 160 cm$^2$/W min. The reason why the margin on the side toward which the side area decreases is set to be larger than the margin on the side toward which the side area increases is that it is desired to make the side area S as small as possible in the range where a desired maximum output P and a desired maximum rotational speed n are realized. From this point of view, the side area which determines the radius R and the length L may be in a range of 0.7S to 1.1S. Also, the side area may be in a range of 0.8S to 1.1S or in a range of 0.9S to 1.1S.

Also, in the present invention, the maximum output P of the synchronous reluctance motor is desirably in a range of 25 kW to 180 kW, more desirably in a range of 40 kW to 180 kW. Also, the desirable maximum output P may be in a range of 40 kW to 150 kW or in a range of 40 kW to 100 kW. A motor having an output of 25 kW or greater and having a rotational speed of 20000 rpm or greater has not yet been realized. Although the torque of the synchronous reluctance motor at the maximum rotational speed depends on the maximum output, the torque is desirably in a range of 5 Nm to 86 Nm, more desirably in a range of 5 Nm to 70 Nm, further desirably in a range of 6 Nm to 60 Nm. Although the reduction ratio of the speed reducer is determined by the used rotational speed range of the output axis of the speed reducer, in consideration of use as a drive source for an electrically driven mobile object, the reduction ratio is desirably in a range of 3 to 30. The reduction ratio may be in a range of 12 to 30 or in a range of 19 to 27.

In the present invention, each of the rare earth bonded magnets desirably has a residual magnetic flux density of 0.6 T to 1.0 T. Also, the rare earth bonded magnets may be formed such that each magnet contains neodymium (Nd) and does not contain any element in a heavy rare earth element group containing dysprosium (Dy) and terbium (Tb). In particular, this is effective because a high performance motor can be realized without using dysprosium (Dy) or terbium (Tb), whose production amounts are limited.

EFFECT OF THE INVENTION

According to the present invention, the rotational speed of the rotor is set to 20000 to 45000 rpm, and thus, it is possible to reduce the side area of the rotor, thereby reducing the amount of a rare earth element to be used, while realizing a maximum output of 25 kW to 180 kW.

BRIEF DESCRIPTION OF THE DRAWINGS

[FIG. 1] Block diagram showing the structure of a geared motor for an electric automobile according to one embodiment of the present invention.

[FIG. 2] Sectional view of a synchronous reluctance motor in which rare earth bonded magnets are embedded in a rotor, the view being taken perpendicularly to the axis of the synchronous reluctance motor.

[FIG. 3] Characteristic chart showing the relation between rotational speed and torque of the motor according to the embodiment.

[FIG. 4] Characteristic chart showing the relation between side area and maximum rotational speed of the motor according to the embodiment, while using maximum output as a parameter.

[FIG. 5] Characteristic chart showing the relation between side area and maximum output of the motor according to the embodiment, while using maximum rotational speed as a parameter.

[FIG. 6] Characteristic chart showing the relation between maximum rotational speed and maximum output of the motor according to the embodiment, while using side area as a parameter.

[FIG. 7.A] Characteristic chart showing, while using a constant of proportionality as a parameter, the possible ranges of maximum rotational speed and maximum output in the case where the side area of the motor according to the embodiment is set to 218.7 cm$^2$.

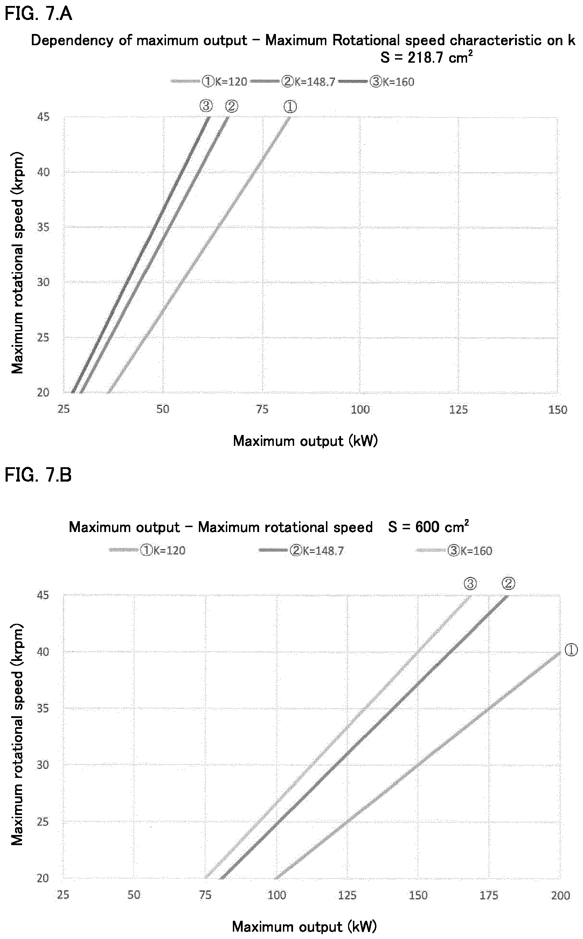

[FIG. 7.B] Characteristic chart showing, while using the constant of proportionality as a parameter, the possible ranges of maximum rotational speed and maximum output in the case where the side area of the motor according to the embodiment is set to 600 cm$^2$.

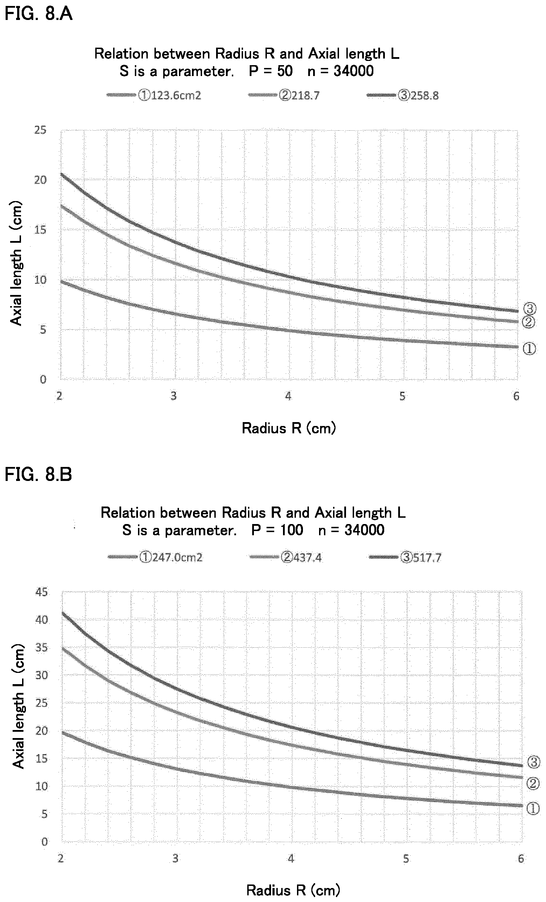

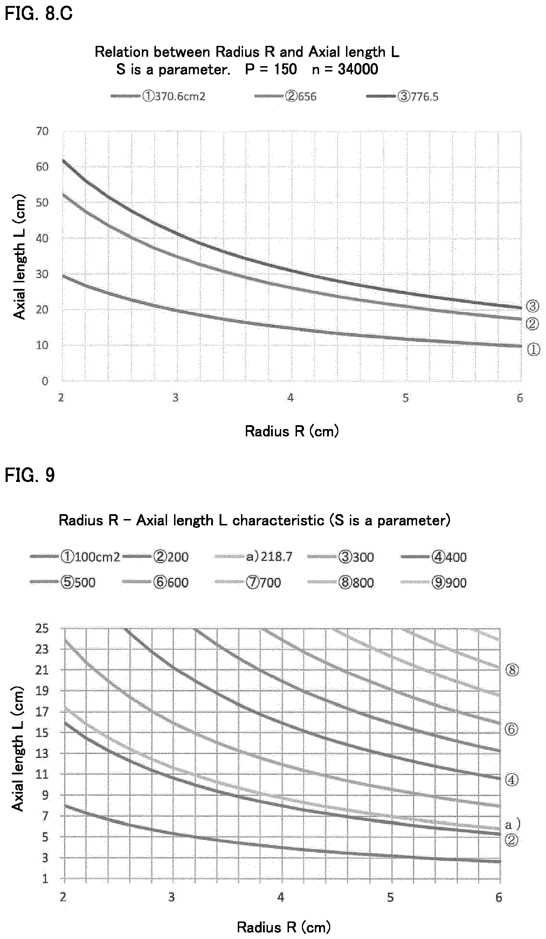

[FIG. 8.A] Characteristic chart showing, by a permission range of side area, the possible ranges of radius and axial length of a motor according to the embodiment whose maximum output is 50 kW and whose maximum rotational speed is 34000 rpm.

[FIG. 8.B] Characteristic chart showing, by a permission range of side area, the possible ranges of radius and axial length of a motor according to the embodiment whose maximum output is 100 kW and whose maximum rotational speed is 34000 rpm.

[FIG. 8.C] Characteristic chart showing, by a permission range of side area, the possible ranges of radius and axial length of a motor according to the embodiment whose maximum output is 150 kW and whose maximum rotational speed is 34000 rpm.

[FIG. 9] Characteristic chart showing the relation between radius and axial length of a motor according to the embodiment by using side area as a parameter.

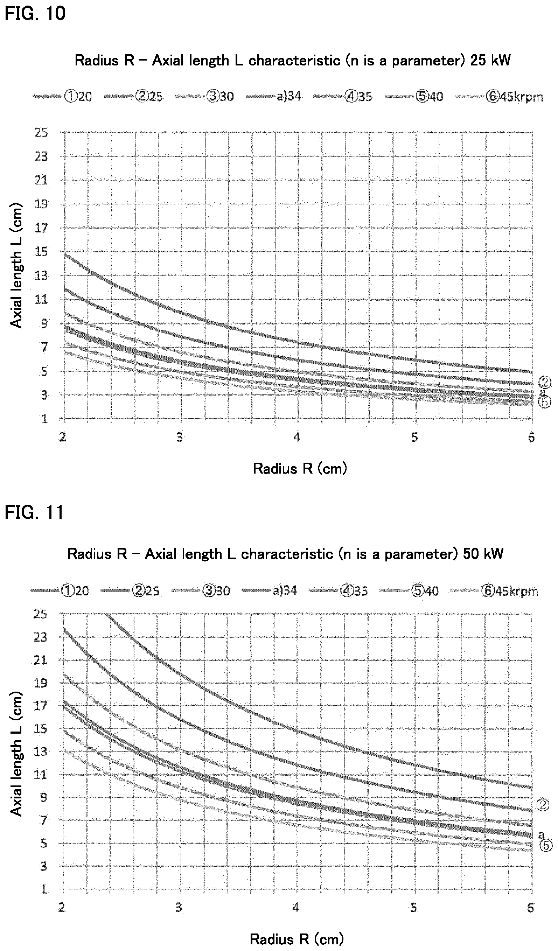

[FIG. 10] Characteristic chart showing the relation between radius and axial length of a motor according to the embodiment whose maximum output is 25 kW by using maximum rotational speed as a parameter.

[FIG. 11] Characteristic chart showing the relation between radius and axial length of a motor according to the embodiment whose maximum output is 50 kW by using maximum rotational speed as a parameter.

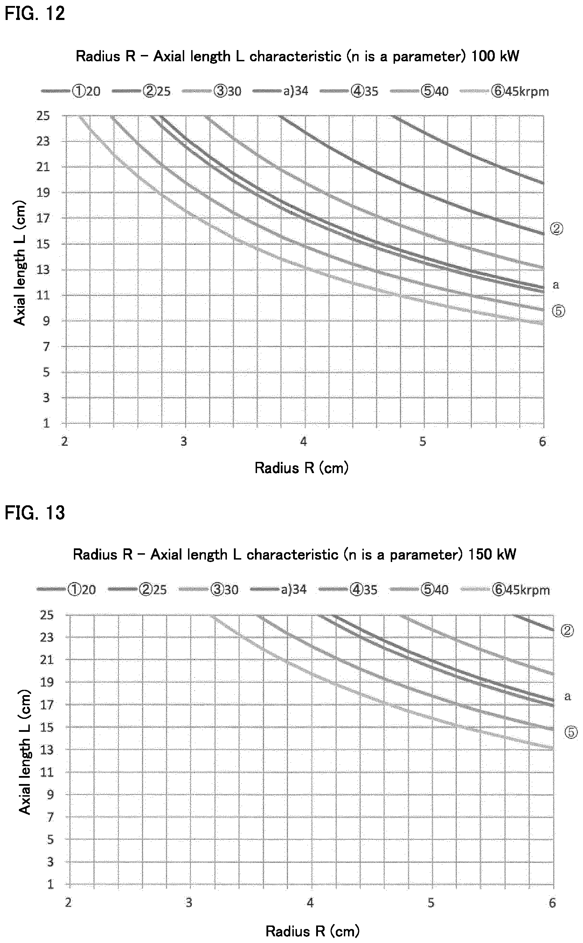

[FIG. 12] Characteristic chart showing the relation between radius and axial length of a motor according to the embodiment whose maximum output is 100 kW by using maximum rotational speed as a parameter.

[FIG. 13] Characteristic chart showing the relation between radius and axial length of a motor according to the embodiment whose maximum output is 150 kW by using maximum rotational speed as a parameter.

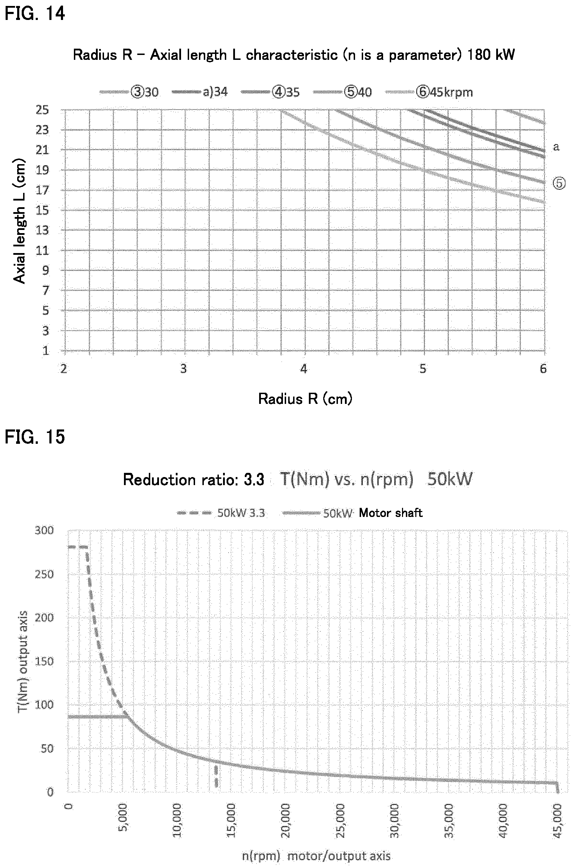

[FIG. 14] Characteristic chart showing the relation between radius and axial length of a motor according to the embodiment whose maximum output is 180 kW by using maximum rotational speed as a parameter.

[FIG. 15] Characteristic chart showing the relation between rotational speeds of a motor axis and an output axis and torque in a geared motor according to the embodiment whose maximum output is 50 kW and whose reduction ratio is 3.3.

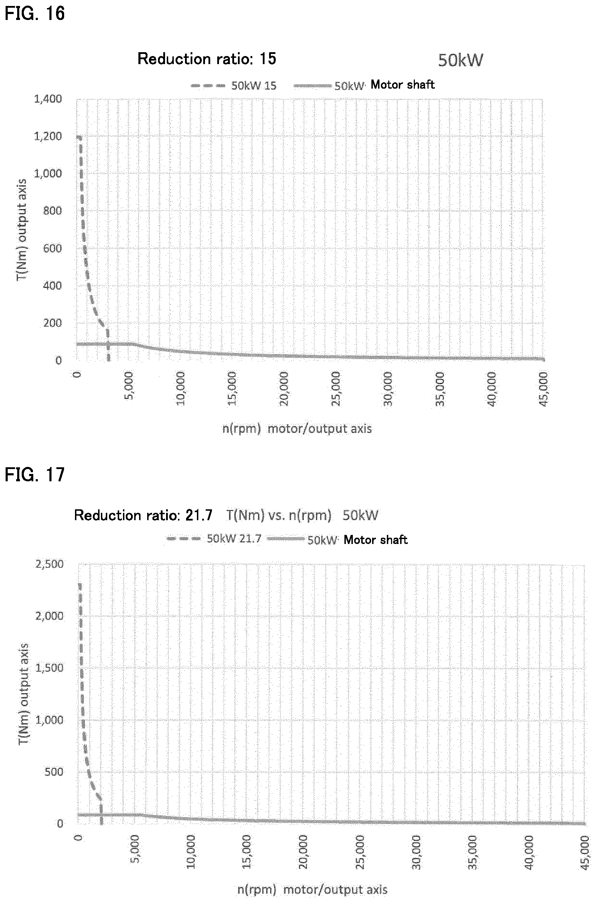

[FIG. 16] Characteristic chart showing the relation between rotational speeds of a motor axis and an output axis and torque in a geared motor according to the embodiment whose maximum output is 50 kW and whose reduction ratio is 15.

[FIG. 17] Characteristic chart showing the relation between rotational speeds of a motor axis and an output axis and torque in a geared motor according to the embodiment whose maximum output is 50 kW and whose reduction ratio is 21.7.

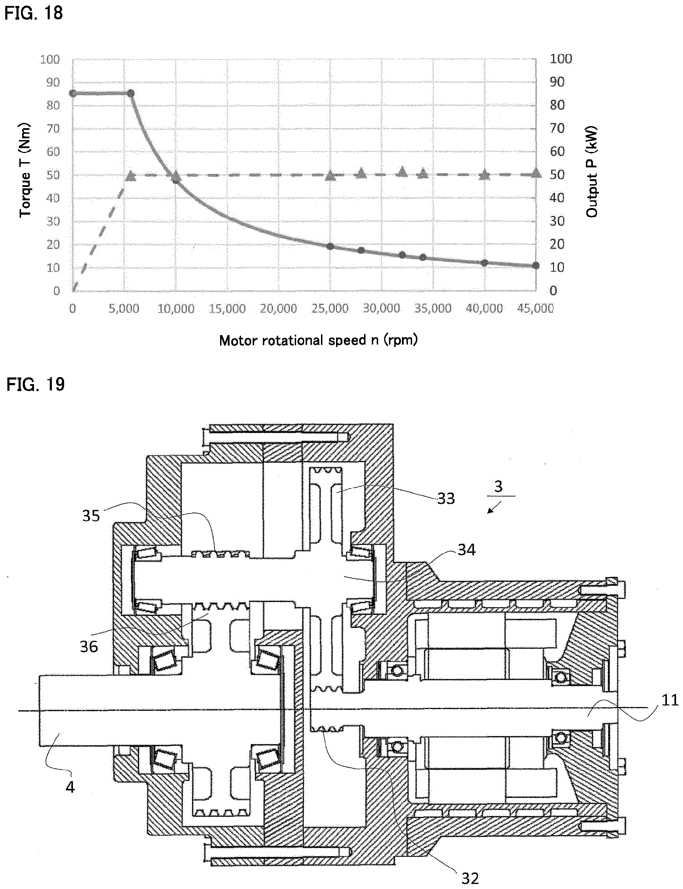

[FIG. 18] Characteristic chart obtained by measuring the relation between rotational speed and torque of a motor itself of the geared motor (the maximum output: 50 kW) according to the embodiment.

[FIG. 19] View showing the structure of a speed reducer of the geared motor according to the embodiment.

MODES FOR CARRYING OUT THE INVENTION

The present invention will now be described on the basis of a specific embodiment. The present invention is not limited to the following embodiment.

Embodiment 1

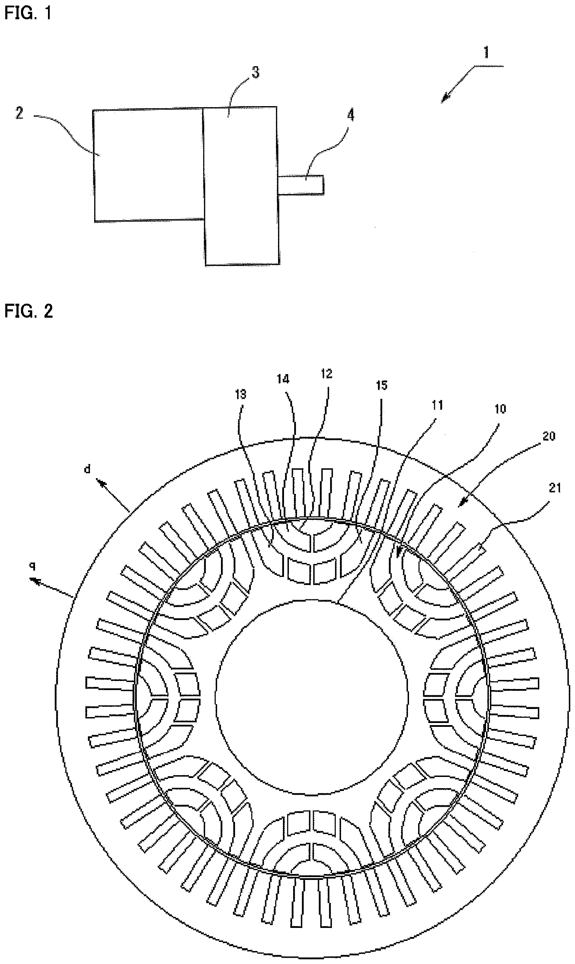

FIG. 1 is a block diagram of a geared motor 1 according to the embodiment. A rotation axis of a rare earth bonded magnet embedded type synchronous reluctance motor 2 is coupled with an output axis 4 of a speed reducer 3 via a group of gears. The rotational speed of the geared motor 1 is reduced by the speed reducer 3, whereby the rotation of the output axis 4 is controlled. Since the mechanism of the speed reducer 3 is well known, its detailed description is omitted. For example, the mechanisms shown in JP2015-72054A and US2007/0111838A1 are known. In the embodiment, a reduction ratio of 3.3 is attained by using two pairs of gears. Needless to say, the reduction ratio may be an arbitrary ratio in the range of 3 to 30. Desirably, the reduction ratio may be an arbitrary ratio in the range of 3.3 to 25. FIG. 19 shows the structure of the speed reducer 3 whose reduction ratio is 21.8. The speed reducer 3 transmits the rotational power of a rotation axis 11 of a rotor 10 (FIG. 2) of the rare earth bonded magnet embedded type synchronous reluctance motor 2 to the output axis 4 shown in FIG. 1. An input gear 32 is formed on an end portion of the rotation axis 11 of the rotor 10. A first transmission gear 33 is rotatably meshed with the input gear 32. The first transmission gear 33 is connected to an intermediate axis 34, and a second transmission gear 35 is formed on an output end side of the intermediate axis 34. An output gear 36 is formed on the output axis 4. The output gear 36 is meshed with the second transmission gear 35 and rotates therewith. Needless to say, the rotation axis 11, the intermediate axis 34, and the output axis 4 are rotatably supported by bearings supported on a housing. The rotational speed of the rotation axis 11 of the rotor 10 is reduced by speed reduction in a first stage (reduction ratio: 5.53) achieved by the input gear 32 and the first transmission gear 33. The rotational speed of the intermediate axis 34 which rotates at the reduced speed is reduced by speed reduction in a second stage (reduction ratio: 3.94) achieved by the second transmission gear 35 and the output gear 36. The reduction ratio of the speed reducer 3 as a whole is 21.79. In this manner, the rotational speed of the rotation axis 11 of the rotor 10 is reduced to the rotational speed of the output axis 4 through the speed reductions in the two stages. The output torque of the output axis 4 becomes 21.8 times the torque of the rotation axis 11 of the rotor 10.

FIG. 2 is a sectional view of the rare earth bonded magnet embedded type synchronous reluctance motor 2, taken perpendicularly to the axis 11 of the rotor 10. The rotor 10 has the rotation axis 11 at its center, and a stator 20 is disposed therearound with a gap formed therebetween. The number of pole pairs is 4. The stator 20 has six slits per pole, and an armature coil 21 is disposed in each slit. The rotor 10 is composed of plates formed of a material whose magnetic permeability is high. The plates are stacked in the axial direction in such a manner that adjacent plates are insulated from each other. The rotor 10 has cavities 12 and 13 extending in the axial direction. Each of the cavities 12 and 13 has an arcuate shape in a cross section of the rotor 10. Each of the outer cavities 12 located near the outer circumference of the rotor 10 is divided into two sections, and each of the inner cavities 13 located near the axis 11 is divided into four sections. The cavities are formed in two rows as viewed in the radial direction. However, the cavities may be formed in three or more rows. Also, in the illustrated example, each cavity is divided into two or four sections in the arcuate direction. However, each cavity may be divided into an arbitrary number of sections; for example, each outer cavity 12 may be divided into three sections, and each inner cavity 13 may be divided into five or six sections.

Rare earth bonded magnets 14 and 15 are charged in these cavities 12 and 13 along the axial direction. Each rare earth bonded magnet is composed of particles of a rare earth element and a binder resin for binding the particles together. Each rare earth bonded magnet has an electric resistivity of 50 $\mu\Omega$m or greater, desirably 100 $\mu\Omega$m or greater, more desirably 500 $\mu\Omega$m or greater, further desirably 1000 $\mu\Omega$m or greater. Thus, eddy current loss can be reduced further. The rare earth element particles are not limited to a single type of particles and may be prepared by mixing a plurality of types of particles which have different compositions and/or particle size distributions. The magnet particles may be isotropic magnet particles or anisotropic magnet particles. In the case where anisotropic magnet particles are used, the bonded magnets may be molded in an orienting magnetic field. Needless to say, orientation and magnetization may be performed simultaneously. The binder resin may be a thermoplastic resin or a thermosetting resin. In the case where a thermosetting resin is used, a hardening heat treatment (curing treatment) is preferably performed after molding.

Although an arbitrary charging method can be used to charge the rare earth bonded magnets 14 and 15, there can be used a molding method of injecting a mixture of rare earth element particles and a resin into the rotor 10 and cooling the injected mixture for solidification. Alternatively, compression molding may be employed. After inserting semi-icured rare earth bonded magnets into the cavities 12 and 13, the rare earth bonded magnets may be heated for complete hardening. In the case of compression molding, it is possible to reduce the amount of the binder resin and increase the amount of the rare earth element particles. Therefore, magnets formed by compression molding can have higher magnetic flux densities as compared with magnets formed by injection molding.

Nd-Fe-B based magnet powder, Sm-Fe-N based magnet powder, Sm-Co based magnet powder, or the like can be used as anisotropic rare earth magnet powder. Magnetization may be performed after a kneaded mixture of magnet powder and a binder resin is charged into the cavities 12 and 13 of the rotor 10 and the rotor is placed in an orientating magnetic field so as to orient the magnetic powder. In the case of compression molding, the kneaded mixture is compressed in an orientating magnetic field, whereby rare earth bonded magnets are formed.

NdFeB based anisotropic rare earth magnet powder, which was Nd based magnet powder (coarse powder), and SmFeN based anisotropic magnet powder, which was Sm based magnet powder (fine powder), were used as anisotropic rare earth magnet powders. PPS (poly phenylene sulfide), which is a thermoplastic resin, was used as a binder resin. A compound (S5P-13MF listed in a catalog of Aichi Steel Corporation) containing these materials was used. This compound was charged into the rotor 10 by injection molding, whereby rare earth bonded magnets were embedded in the rotor and were united with the rotor.

The residual magnetic flux density Br of the rare earth bonded magnets was set to 0.67 T. It is preferred to set the residual magnetic flux density Br to fall within a range of 0.6 T to 1.0 T.

1. Torque - rotational speed characteristic

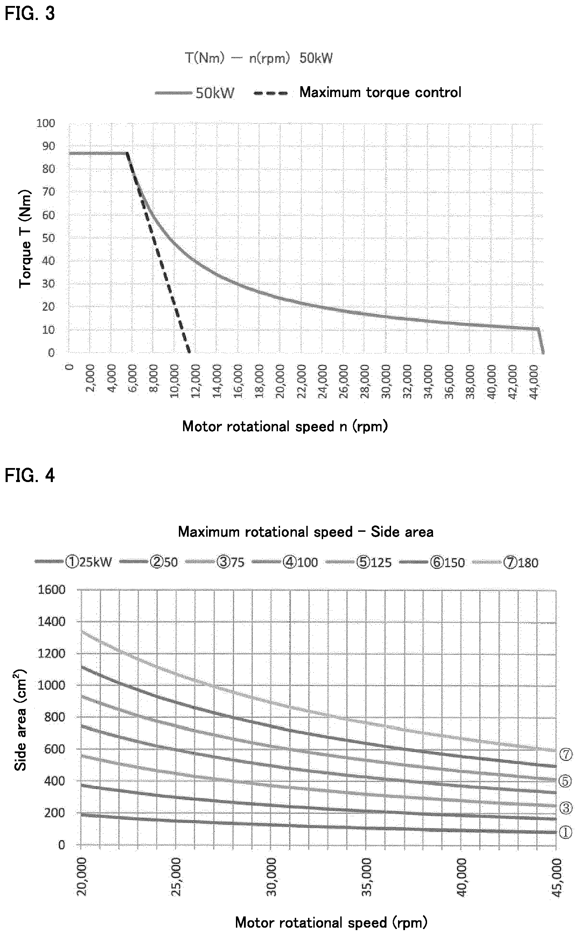

FIG. 3 shows the torque - rotational speed characteristic of a rare earth bonded magnet embedded type reluctance motor. In a rotational speed range of 0 to 5500 rpm, torque becomes maximum and constant (87 Nm). In this rotational speed range, armature current has the maximum value and is constant. In this range (period), as the rotational speed increases, the voltage applied to the armature increases such that the maximum torque is output, and the output power linearly increases with the rotational speed. A torque - rotational speed characteristic in a rotational speed range of 5500 rpm to 11500 rpm, which is shown by a broken straight line, is a characteristic for the case where field-weakening control is not performed. This characteristic represents maximum torque control and corresponds to a region where, as the rotational speed increases, the armature current decreases due to induced electromotive force generated in the armature. In the case where field-weakening control is not performed, the rotational speed becomes zero at 11500 rpm, and rotational speeds greater than 11500 rpm cannot be obtained.

2. Field-weakening control

In FIG. 3, a curve in a rotational speed range of 5500 rpm to 45000 rpm (maximum rotational speed) is a theoretical curve obtained by the following Equation (1) and representing the torque - rotational speed characteristic at the time when field-weakening control is performed. In the motor, when the rotational speed increases, induced counter electromotive force (speed electromotive force) is generated in the armature coil, and its armature current decreases, so that the rotational speed of the motor does not increase. In order to weaken the interlinkage flux of the armature coil by the rare earth bonded magnets, the phase of the armature current is controlled to be leading, whereby the interlinkage flux is reduced by armature reaction, and thus, the induced counter electromotive force is suppressed.

3. Relational expression of motor

Equation (1) holds for the relation among the torque T (Nm), rotational speed n (rpm), and output P (W) of the motor. The torque T of the motor is expressed by Equation (2), where $P_n$ is the number of pole pairs, and, as shown by Equation (3), $\Phi_a$ is a value (d-axis component) obtained by converting the interlinkage flux (flux linkage) $\Phi_m$ of the armature coil by the magnetic fluxes of the bonded magnets to d-axis component in a dq coordinate system. Here, the interlinkage flux $\Phi_m$ is a maximum (DC) interlinkage flux when the rotor is stopped and a peak value when the rotor rotates. $I_d$ and $I_q$ are the d axis (direct axis) component and the q axis (quadrature axis) component of the armature current, respectively. In the present embodiment, the number $P_n$ of pole pairs is 4. However, the number $P_n$ of pole pairs may be an arbitrary number other than 4; for example, 1, 2, 3, or 6. $L_d$ and $L_q$ are the d-axis inductance and the q-axis inductance of the armature coil, respectively. As shown in FIG. 2, the d axis extends in the radial direction from the center of the ark of each bonded magnet, and the q axis extends in the radial direction from an intermediate point between adjacent bonded magnets. The angle formed between the d axis and the q axis is 22.5 degrees (mechanical angle). When considered in electrical angle, the q axis coincides with the direction of no-load induced electromotive force, and the d axis coincides with the direction in which the magnetic fluxes produced by the bonded magnets extend toward the armature coil. The q axis has a phase delay of 90° in relation to the d axis.

[Equation 1]

$$\frac{2\pi}{60}nT = P \quad \dots (1)$$

[Equation 2]

$$T = P_n\left[\Phi_a I_q - \left(L_q - L_d\right)I_q I_d\right] \quad \dots (2)$$

[Equation 3]

$$\Phi_a = \sqrt{\frac{3}{2}}\Phi_m \quad \dots (3)$$

Equation (2) can be transformed to Equation (4) by using the area S of the cylindrical side surface of the rotor (hereinafter referred to as the "side area S"). In Equation (4), $\Phi_{a0}$ is the interlinkage flux per unit side area (interlinkage flux density) (the d-axis component). $L_{d0}$ and $L_{q0}$ are the d axis inductance and the q axis inductance, respectively, of the armature coil per unit side area.

[Equation 4]

$$T = SP_n\left[\Phi_{a0} I_q - \left(L_{q0} - L_{d0}\right)I_q I_d\right] \quad \dots (4)$$

Here, k is defined by Equation (5). T in Equation (4) is expressed by using k and is substituted in Equation (1), whereby the side area S can be expressed by Equation (6).

[Equation 5]

$$k = \frac{60}{2\pi P_n\left[\Phi_{a0}I_q - \left(L_{q0} - L_{d0}\right)I_q I_d\right]} \qquad \ldots (5)$$

[Equation 6]

$$S = k\frac{P}{n} \qquad \ldots (6)$$

In Equation (4), each of $L_{d0}$, $L_{q0}$, $I_d$, and $I_q$ at the maximum rotational speed can be regarded to be constant irrespective of the maximum output and the side area because of the limit of the field-weakening control at the maximum rotational speed. In a motor of the embodiment whose maximum output was 50 kW, the side area S was 218.7 cm$^2$, and a maximum rotational speed of 34000 rpm was obtained. The value of k at this maximum rotational speed obtained from Equation (6) is 148.7 cm$^2$/W min.

4. Relation between the maximum rotational speed and the side area obtained by using the maximum output as a parameter

Since Equation (5) shows that, at the maximum rotational speed, the value of k does not depend on the side area S, the value of k can be regarded to be constant irrespective of the maximum output. When the maximum rotational speed is substituted as the value of n in Equation (6), the relation between the maximum rotational speed n and the side area S can be obtained by using the maximum output P as a parameter. FIG. 4 shows the obtained relations. In FIG. 4, curves representing the obtained relations are located such that the greater the maximum output, the higher the position of the curve. A curve located at the lowest position is a curve for the case where the maximum output is 25 kW, and a curve located at the highest position is a curve for the case where the maximum output is 180 kW. FIG. 4 shows that, in order to increase the maximum rotational speed n, the side area S must be reduced. In other words, in order to reduce the amount of the rare earth bonded magnets to be used, it is necessary to increase the maximum rotational speed. When the maximum rotational speed n and the maximum output P are determined, the optimal side area S can be obtained from Equation (6) and FIG. 4.

5. Relation between the maximum output and the side area obtained by using the maximum rotational speed as a parameter

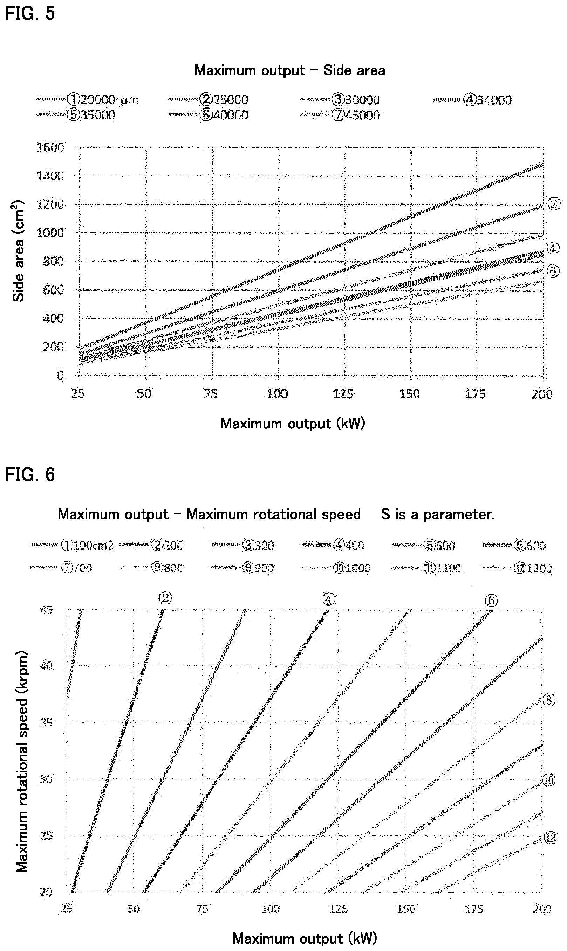

FIG. 5 shows the relation between the maximum output P and the side area S, wherein the maximum rotational speed n is a parameter. In FIG. 5, the greater the maximum rotational speed, the smaller the inclination. A straight line whose inclination is the largest corresponds to the case where the maximum rotational speed is 20000 rpm, and a straight line whose inclination is the smallest corresponds to the case where the maximum rotational speed is 45000 rpm. FIG. 5 shows that, although the side area S is proportional to the maximum output P, the greater the maximum rotational speed n, the smaller the constant of proportionality of the side area S to the maximum output P. This reveals that, if the maximum rotational speed is increased, it becomes unnecessary to increase the side area S much even when the maximum output P is increased, whereby the amount of rare earth bonded magnets to be used can be reduced.

5. The relation between the maximum rotational speed and the maximum output obtained by using the side area as a parameter

FIG. 6 shows the relation between the maximum rotational speed n and the maximum output P, wherein the side area S is a parameter. In FIG. 6, the greater the side area, the smaller the inclination. A straight line showing the above relation for the case where the side area is 1200 cm$^2$ has the smallest inclination, and a straight line showing the above relation for the case where the side area is 100 cm$^2$ has the largest inclination. FIG. 6 shows that, when the side area S is 600 cm$^2$, the range of optimal combined selection of the maximum output P and the maximum rotational speed n is the widest. When the side area S is 600 cm$^2$, the maximum rotational speed n can be determined within the entire range of 20000 rpm to 45000 rpm, and the maximum output can assume a value within the range of 81 kW to 182 kW.

6. The relation between the maximum rotational speed and the maximum output obtained by fixing the side area and using k as a parameter

FIG. 7.A shows the relation between the maximum rotational speed n and the maximum output P obtained by setting the side area S to 218.7 cm$^2$ and using k as a parameter. Also, FIG. 7.B shows the relation between the maximum rotational speed n and the maximum output P obtained by setting the side area S to 600 cm$^2$ and using k as a parameter. FIGS. 7.A and 7B show that the smaller the value of k, the greater the possible ranges of the maximum rotational speed and the maximum output for the same side area, respectively. Accordingly, decreasing the value of k is important.

As is apparent from Equation (5), the value of k is proportional to the reciprocal of $\Phi_{a0} I_q - (L_{q0} - L_{d0}) I_q \cdot I_d$, where $L_{q0} - L_{d0} > 0$, $I_q > 0$, and $I_d < 0$. The first term represents a magnet torque per unit pole pair number and unit side area, and the second term represents a reluctance torque per unit pole pair number and unit side area. In general, the reluctance torque is greater than the magnet torque. However, since phase current increases as the rotational speed decreases, the degree of increase of the reluctance torque becomes greater than that of the magnet torque. Since phase current decreases as the rotational speed increases, the rate of reduction of the reluctance torque to the rotational speed is larger than that of the magnet torque. Therefore, as the rotational speed increases, the ratio of the magnet torque to the total torque increases gradually, the influence of the interlinkage flux $\Phi_{a0}$ per unit area on the value of k increases. The interlinkage flux $\Phi_{a0}$ depends on the residual magnetic flux density Br of the bonded magnets, the shape of each bonded magnet, the arrangement of a plurality of bonded magnets, the number of layers of bonded magnets, the interval between bonded magnets of adjacent magnetic poles, the slit width of the bonded magnets, the permeability of a magnetic circuit, the positional relation between the bonded magnets and the armature coils, etc. In the present invention, the value of k is set within the range of 120 cm$^2$/W min to 160 cm$^2$/W min, in consideration of the fact that the residual magnetic flux density Br at the time when the value of k is set to 148.7 (cm$^2$/W min) is 0.67 T, and that the practical range of the residual magnetic flux density Br is 0.6 to 1.0 T. The smaller the value of k, the greater the degree to which the side area S can be reduced for the same maximum rotational speed and the same maximum output, and the greater the degree to which the amount of bonded magnets used can be reduced.

7. The relation between radius and axial length for the case where predetermined margins are imparted to the determined side area

The optimum side area S at the time when a maximum output of 50 kW and a maximum rotational speed of 34000 rpm were realized was 218.7 cm$^2$. FIG. 8.A shows the relation between the radius R of the rotor and the length L in the axial direction (hereinafter referred to as the "axial length L") of the rotor within the range of 0.7S to 1.1S, where S represents the side area within the side area range (176.5 to 235.3 cm$^2$) determined by the range of the value of k (120 to 160 cm$^2$/W min). Curves corresponding to different side areas are located in respective regions and show that the greater the side area, the greater the axial length. The (R, L) in the range between an R-L curve for the case where the side area is 258.8 cm$^2$ (1.1 times the side area (235.3 cm$^2$) determined with the maximum value of k (160 cm$^2$/W min) and an R-L curve for the case where the side area is 123.6 cm$^2$ (0.7 times the side area (176.5 cm$^2$) determined with the minimum value of k (120 cm$^2$/W min) is a range desired for the case where the maximum output is 50 kW and the maximum rotational speed is 34000 rpm.

The optimum side area S for the case where the maximum output is 100 kW and the maximum rotational speed is 34000 rpm is 437.4 cm$^2$. FIG. 8.B shows the relation between the radius R of the rotor and the axial length L of the rotor within the range of 0.7S to 1.1S, where S represents the side area within the side area range (352.9 to 470.6 cm$^2$) determined by the range of the value of k (120 to 160 cm$^2$/W min). Curves corresponding to different side areas are located in respective regions and show that the greater the side area, the greater the axial length. The (R, L) in the range between an R-L curve for the case where the side area is 517.7 cm$^2$ (1.1 times the side area (470.6 cm$^2$) determined with the maximum value of k (160 cm$^2$/W min) and an R-L curve for the case where the side area is 247.0 cm$^2$ (0.7 times the side area (352.9 cm$^2$) determined with the minimum value of k (120 cm$^2$/W min) is a range desired for the case where the maximum output is 100 kW and the maximum rotational speed is 34000 rmp.

The optimum side area S for the case where the maximum output is 150 kW and the maximum rotational speed is 34000 rpm is 656.0 cm$^2$. FIG. 8.C shows the relation between the radius R of the rotor and the axial length L of the rotor within the range of 0.7S to 1.1S, where S is the side area within the side area range (529.4 to 705.9 cm$^2$) determined by the range of the value of k (120 to 160 cm$^2$/W min). Curves corresponding to different side areas are located in respective regions and show that the greater the side area, the greater the axial length. The (R, L) in the range between an R-L curve for the case where the side area is 776.5 cm$^2$ (1.1 times the side area (705.9 cm$^2$) determined with the maximum value of k (160 cm$^2$/W min) and an R-L curve for the case where the side area is 370.6 cm$^2$ (0.7 times the side area (529.4 cm$^2$) determined with the minimum value of k (120 cm$^2$/W min) is a range desired for the case where the maximum output is 150 kW and the maximum rotational speed is 34000 rpm.

8. The relation between the radius and the axial length determined by using the side area as a parameter

FIG. 9 shows the relation between the radius R and the axial length L of the rotor determined by using the side area S as a parameter. In FIG. 9, curves corresponding to different side areas are located at different positions and show that the greater the side area, the higher the curve position (the longer the axial length). When the maximum output P and the maximum rotational speed n are determined, an optimal side area S can be obtained, and an optimal combination of the radius R and the axial length L for realizing the optimal side areas S can be determined.

9. The relations between the radius and the axial length determined for different maximum outputs by using the maximum rotational speed as a parameter

FIG. 10 shows the optimal relation between the radius R and the axial length L determined for the case where the maximum output is 25 kW by using the maximum rotational speed as a parameter. FIG. 11 shows the optimal relation between the radius R and the axial length L determined for the case where the maximum output is 50 kW by using the maximum rotational speed as a parameter. FIG. 12 shows the optimal relation between the radius R and the axial length L determined for the case where the maximum output is 100 kW by using the maximum rotational speed as a parameter. FIG. 13 shows the optimal relation between the radius R and the axial length L determined for the case where the maximum output is 150 kW by using the maximum rotational speed as a parameter. FIG. 14 shows the optimal relation between the radius R and the axial length L determined for the case where the maximum output is 180 kW by using the maximum rotational speed as a parameter. In each of FIGS. 10 to 14, curves corresponding to different maximum rotational speeds are located at different positions and show that the greater the maximum rotational speed, the lower the curve position (the shorter the axial length).

In the case where the maximum output is 25 kW, conditions of 2 cm ≤ R ≤ 6 cm and 2 cm ≤ L ≤ 25 cm are satisfied in the entire maximum rotational speed range of 20000 rpm to 45000 rpm, and the degree of freedom is high. It is understood that, although the ranges of the radius R and the axial length L which satisfy the conditions of 2 cm ≤ R ≤ 6 cm and 2 cm ≤ L ≤ 25 narrow as the maximum output increases, the optimal ranges of the radius R and the axial length L expand when the maximum rotational speed is increased (FIG. 10 to FIG. 14). In particular, in the case of 150 kW shown in FIG. 13, when the maximum rotational speed is 45000 rpm, the radius R can be determined within the entire range of 3.2 cm to 6 cm. Accordingly, by increasing the maximum rotational speed n, it is possible to reduce the side area, thereby increasing the degree of freedom in reducing the size.

10. Optimization for realizing the maximum rotational speed

When a maximum output P and a maximum rotational speed n are given, a torque T can be obtained from Equation (1). This torque means the maximum torque for the maximum output P and the maximum rotational speed n. Namely, this maximum torque means the limit torque at that output and that rotational speed, and toque greater than the limit torque cannot be output. Meanwhile, the torque T given by Equation (4) are determined by the values of $L_{d0}$, $L_{q0}$, $I_d$, and $I_q$ at the maximum rotational speed of the motor. Accordingly, when the values of $\Phi_{a0}$, $L_{d0}$, $L_{q0}$, $I_d$, and $I_q$ at the maximum rotational speed are determined such that the torque T given by Equation (4) becomes the limit torque, the maximum rotational speed n which satisfies Equation (1) can be realized.

11. Gear speed reduction

Next, the characteristic of a speed reducer which reduces the rotational speed of the motor to the rotational speed of a drive shaft for propelling an automobile (the output axis of the speed reducer) will be described for the case where the maximum output is 50 kW. FIG. 15, FIG. 16, and FIG. 17 respectively show torque - rotational speed characteristics for the cases where the reduction ratio is 3.3, 15, and 21.7. The horizontal axis represents the rotational speed of the rotation axis of the motor for the torque - rotational speed characteristic of the motor and represents the rotational speed of the output axis of the speed reducer for the torque - rotational speed characteristic of the drive shaft, respectively. A solid line is a characteristic curve representing the relation between the rotation axis speed and the rotation axis torque of the motor, and a broken line is a characteristic curve representing the relation between the output axis speed and the output axis torque of the speed reducer. In the case where the reduction ratio is 3.3, the rotational speed of the motor which rotates in the rotational speed range of 0 to 45000 rpm is reduced to the rotational speed range of 0 to 13600 rpm at the drive shaft. The maximum torque increases from 86.8 Nm to 281 Nm (3.2 times) as a result of speed reduction. In the case where the reduction ratio is 15, when the rotational speed range of the motor is 0 to 45000 rpm, as a result of speed reduction, the rotational speed range of the drive shaft becomes 0 to 3000 rpm, and the maximum torque increases from 86.8 Nm to 1194 Nm (13.8 times). In the case where the reduction ratio is 21.7, when the rotational speed range of the motor is 0 to 45000 rpm, as a result of speed reduction, the rotational speed range of the drive shaft becomes 0 to 2070 rpm, and the maximum torque increases from 86.8 Nm to 2303 Nm (26.5 times).

12. Prototype machine

The radius R of the rotor is 4 cm, the axial length L of the rotor is 8.7 cm, and the side area S is 218.7 cm$^2$. As shown in FIG. 2, rare earth bonded magnets (not containing Dy) are disposed such that two magnet rows are arranged in the radial direction, and in each magnet row, a plurality of magnets are arranged in the circumferential direction for each magnetic pole of the rotor. The bonded magnets on the rotor outer circumferential side of each magnet row are disposed along an arc tangent line and are magnetized by a magnetic field applied perpendicularly to the arc tangent line. Since anisotropic magnet powder is used this time, at the time of molding, orientating treatment is performed by using an applied magnetic field similar to that used in magnetization treatment. The residual magnetic flux density Br of rare earth bonded magnets formed by injection molding of the above-described compound (S5P-13MF) is 0.67 T, the coil interlinkage flux $\Phi_m$ is 32.6 mWb, the value of $\Phi_a$ is 40.0 mWb, and the reduction ratio is 3.3. In the speed reducer, cooled lubrication oil is jetted to the gears for smooth rotation and for cooling of the machine. The maximum output P is 50 kW. The maximum rotational speed of 45000 rpm is realized. At the maximum rotational speed of 34000 rpm, long time operation at that rotational speed was realized. When the rotational speed was 34000 rpm, $I_d$ was -141.4 A, $I_q$ was 34.5 A, the effective value $I_e$ of phase current was 84 A, the torque was 14.3 Nm, and the advance angle $\beta$ (the angle between no-load induced electromotive force and armature current) was 76.3°. At the maximum rotational speed (45000 rpm), $I_d$ was -150.3 A, $I_q$ was 25.4 A, the effective value $I_e$ of phase current was 88 A, the torque was 10.9 Nm, and the advance angle $\beta$ was 80.4°. Since the maximum rotational speed of 45000 rpm was realized, it was found that, for the output of 50 kW and 120 cm$^2$/W min $\leq$ k $\leq$ 160 cm$^2$/W min, the range of 133.3 cm$^2$ to 177.8 cm$^2$ can be realized as the the optimal range of the side area S.

The relation among rotational speed (rpm), torque T (Nm), and output (kW) of the motor of the above-described prototype machine alone was measured. Table 1 shows the measured values and values converted from the phase current effective value $I_e$.

[Table 1]

| Measured values | | | | Values converted from measured le | | | |
|---|---|---|---|---|---|---|---|
| Rotational speed n (rpm) | Torque T (Nm) | Output P (kW) | Phase current effetive value le (A) | dq current absolute value la (A) | Advance angle β (deg.) | Id (A) | Iq (A) |
| 5600 | 85.3 | 50.0 | 200 | 346.4 | 52.4 | -274.5 | 211.4 |
| 10000 | 47.8 | 50.1 | 110 | 190.5 | 43.9 | -132.1 | 137.3 |
| 25000 | 19.1 | 50.0 | 84 | 145.5 | 71.0 | -137.6 | 47.4 |
| 28000 | 17.4 | 51.0 | 84 | 145.5 | 73.1 | -139.2 | 42.3 |
| 32000 | 15.4 | 51.6 | 84 | 145.5 | 75.6 | -140.9 | 36.2 |
| 34000 | 14.3 | 50.9 | 84 | 145.5 | 76.3 | -141.4 | 34.5 |
| 40000 | 12.0 | 50.3 | 84 | 145.5 | 78.5 | -142.6 | 29.0 |
| 45000 | 10.9 | 51.3 | 88 | 152.4 | 80.4 | -150.3 | 25.4 |

It is found that the measured rotational speed n - torque T characteristic of FIG. 18 well coincides with the theoretical characteristic of FIG. 3. Also, it is understood that the output P is constant in a rotational speed range of 5600 rpm or higher, and the output does not decrease even when the rotational speed becomes high.

Also, in the above-described prototype machine, the speed reducer shown in FIG. 19 was employed, and its reduction ratio was set to 21.8. As a result, the maximum rotational speed of 45000 rpm was realized like the case where the reduction ratio was set to 3.3.

The above-described prototype machine reveals that the side area S of the rotor of the motor and the value of k are important factors for realizing the maximum output of 25 kW to 180 kW and the maximum rotational speed of 20000 rpm to 45000 rpm, and thus, the present inventors have completed the invention of minimizing the amount of the rare earth element by determining the side area, the radius, and the axial length of the rotor in the above-described manner.

INDUSTRIAL APPLICABILITY

The present invention can be applied to a drive motor for an electrically driven mobile object in which the entirety or part of propulsion power is drive power produced by the motor.

DESCRIPTION OF REFERENCE NUMERALS

1: geared motor
2: rare earth bonded magnet embedded type synchronous reluctance motor
3: speed reducer
10: rotor
12, 13: cavity
14, 15: rare earth bonded magnet
20: stator
21: armature coil

**Claims**

1.  A geared motor for an electrically driven mobile object, the geared motor providing propulsion power to the electrically driven mobile object and comprising:

    a synchronous reluctance motor whose maximum rotational speed is 20000 rpm to 45000 rpm and in which rare earth bonded magnets are embedded in a rotor; and
    a speed reducer which reduces the rotational speed of the synchronous reluctance motor to a rotational speed in a usage range while increasing torque to a predetermined range.

2.  The geared motor for an electrically driven mobile object according to claim 1, wherein, when a radius of the rotor is represented by R (cm) and a length of the rotor in an axial direction is represented by L (cm), the rotor has a size which satisfies conditions of $2 \text{ cm} \leq R \leq 6 \text{ cm}$ and $2 \text{ cm} \leq L \leq 25 \text{ cm}$.

3.  The geared motor for an electrically driven mobile object according to claim 1 or 2, wherein, when a maximum rotational speed of the synchronous reluctance motor is represented by n (rpm), a maximum output of the synchronous reluctance motor is represented by P (W), a radius of the rotor is represented by R (cm), a length of the rotor in an axial direction is represented by L (cm), and a side area of the rotor is represented by S ($cm^2$) and obtained by an equation of $S = 2\pi RL$, the rotor has a radius R and a length L, which provide a side area within a range of 0.7S to 1.1S, where S satisfies the following equation:

$$S = kP/n,$$

where k ($cm^2$/W min) is a constant of proportionality and satisfies a condition of $120 \text{ cm}^2/\text{W min} \leq k \leq 160 \text{ cm}^2/\text{W min}$.

4.  The geared motor for an electrically driven mobile object according to any one of claims 1 to 3, wherein the synchronous reluctance motor has a maximum output P of 25 kW to 180 kW.

5.  The geared motor for an electrically driven mobile object according to any one of claims 1 to 4, wherein the synchronous reluctance motor produces a torque of 5 Nm to 86 Nm at the maximum rotational speed.

6.  The geared motor for an electrically driven mobile object according to any one of claims 1 to 5, wherein the speed reducer has a reduction ratio of 3 to 30.

7.  The geared motor for an electrically driven mobile object according to any one of claims 1 to 6, wherein each of the rare earth bonded magnets has a residual magnetic flux density of 0.6 T to 1.0 T.

8.  The geared motor for an electrically driven mobile object according to any one of claims 1 to 7, wherein each of the rare earth bonded magnets contains neodymium (Nd) and does not contain any element in a heavy rare earth element group containing dysprosium (Dy) and terbium (Tb).

9. The geared motor for an electrically driven mobile object according to any one of claims 1 to 8, wherein the electrically driven mobile object is an automobile in which only a motor is used as a drive source, a hybrid automobile in which propulsion power produced by a motor is used in addition to propulsion power produced by an internal combustion engine, or a fuel automobile in which fuel is converted to electricity and drive power is obtained by a motor.

FIG. 1

FIG. 2

## FIG. 3

T(Nm) — n(rpm) 50kW

——50kW    ▬ ▬ ▬ Maximum torque control

Motor rotational speed n (rpm)

## FIG. 4

Maximum rotational speed - Side area

①25kW ——②50 ——③75 ——④100 ——⑤125 ——⑥150 ……⑦180

Motor rotational speed (rpm)

## FIG. 5

Maximum output − Side area

①20000rpm  ②25000  ③30000  ④34000
⑤35000  ⑥40000  ⑦45000

## FIG. 6

Maximum output − Maximum rotational speed   S is a parameter.

①100cm2  ②200  ③300  ④400  ⑤500  ⑥600
⑦700  ⑧800  ⑨900  ⑩1000  ⑪1100  ⑫1200

FIG. 7.A

Dependency of maximum output – Maximum Rotational speed characteristic on k
S = 218.7 cm²

①K=120 ②K=148.7 ③K=160

FIG. 7.B

Maximum output – Maximum rotational speed   S = 600 cm²

①K=120 ②K=148.7 ③K=160

## FIG. 8.A

Relation between Radius R and Axial length L
S is a parameter.   P = 50   n = 34000

① 123.6cm2        ② 218.7        ③ 258.8

Axial length L (cm) vs Radius R (cm)

## FIG. 8.B

Relation between Radius R and Axial length L
S is a parameter.   P = 100   n = 34000

① 247.0cm2        ② 437.4        ③ 517.7

Axial length L (cm) vs Radius R (cm)

FIG. 8.C

Relation between Radius R and Axial length L
S is a parameter.  P = 150  n = 34000

①370.6cm2      ②656      ③776.5

Radius R (cm)

FIG. 9

Radius R − Axial length L characteristic (S is a parameter)

①100cm2  ②200  a)218.7  ③300  ④400
⑤500  ⑥600  ⑦700  ⑧800  ⑨900

Radius R (cm)

FIG. 10

Radius R – Axial length L characteristic (n is a parameter) 25 kW

①20  ②25  ③30  a)34  ④35  ⑤40  ⑥45krpm

FIG. 11

Radius R – Axial length L characteristic (n is a parameter) 50 kW

①20  ②25  ③30  a)34  ④35  ⑤40  ⑥45krpm

FIG. 12

Radius R - Axial length L characteristic (n is a parameter) 100 kW

①20  ②25  ③30  a)34  ④35  ⑤40  ⑥45krpm

Axial length L (cm)

Radius R (cm)

FIG. 13

Radius R - Axial length L characteristic (n is a parameter) 150 kW

①20  ②25  ③30  a)34  ④35  ⑤40  ⑥45krpm

Axial length L (cm)

Radius R (cm)

FIG. 14

Radius R – Axial length L characteristic (n is a parameter) 180 kW

FIG. 15

Reduction ratio: 3.3  T(Nm) vs. n(rpm)  50kW

## FIG. 16

**Reduction ratio: 15**          50kW

## FIG. 17

**Reduction ratio: 21.7** T(Nm) vs. n(rpm) 50kW

FIG. 18

FIG. 19

## INTERNATIONAL SEARCH REPORT

| | International application No. |
| --- | --- |
| | **PCT/JP2021/044779** |

**A. CLASSIFICATION OF SUBJECT MATTER**

*H02K 19/10*(2006.01)i; *B60L 15/20*(2006.01)i; *H02K 1/2706*(2022.01)i
FI:  H02K19/10 A; H02K1/2706; B60L15/20 Z

According to International Patent Classification (IPC) or to both national classification and IPC

**B. FIELDS SEARCHED**

Minimum documentation searched (classification system followed by classification symbols)

H02K19/10; B60L15/20; H02K1/2706

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2015-37331 A (MITSUBA CORP.) 23 February 2015 (2015-02-23)<br>paragraphs [0014], [0022], [0023], fig. 1, 2 | 1-9 |
| Y | JP 8-256457 A (TOSHIBA MACHINE CO., LTD.) 01 October 1996 (1996-10-01)<br>paragraphs [0045], [0067], [0088], fig. 1 | 1-9 |
| Y | JP 2009-227221 A (MITSUBA CORP.) 08 October 2009 (2009-10-08)<br>paragraph [0015], fig. 1 | 1-9 |
| Y | JP 2019-180180 A (AICHI STEEL CORP.) 17 October 2019 (2019-10-17)<br>paragraph [0028] | 7-9 |
| Y | JP 2017-107889 A (PANASONIC INTELLECTUAL PROPERTY MANAGEMENT CO., LTD.) 15 June 2017 (2017-06-15)<br>paragraph [0077] | 8-9 |
| Y | JP 2006-149031 A (TOYOTA MOTOR CORP.) 08 June 2006 (2006-06-08)<br>paragraph [0002], fig. 1, 2 | 9 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **31 January 2022** | **08 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| | International application No. |
| --- | --- |
| | **PCT/JP2021/044779** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2001-339923 A (MATSUSHITA ELECTRIC INDUSTRIAL CO., LTD.) 07 December 2001 (2001-12-07)<br>    paragraphs [0002], [0037], [0051], fig. 4, 7 | 9 |

Form PCT/ISA/210 (second sheet) (January 2015)

**INTERNATIONAL SEARCH REPORT**
Information on patent family members

International application No.

**PCT/JP2021/044779**

| Patent document cited in search report | | | Publication date (day/month/year) | Patent family member(s) | | | Publication date (day/month/year) |
|---|---|---|---|---|---|---|---|
| JP | 2015-37331 | A | 23 February 2015 | (Family: none) | | | |
| JP | 8-256457 | A | 01 October 1996 | (Family: none) | | | |
| JP | 2009-227221 | A | 08 October 2009 | (Family: none) | | | |
| JP | 2019-180180 | A | 17 October 2019 | US paragraph [0029] WO EP CN JP | 2021/0013755 2019/189143 3780351 111886779 6544455 | A1 A1 A1 A B1 | |
| JP | 2017-107889 | A | 15 June 2017 | (Family: none) | | | |
| JP | 2006-149031 | A | 08 June 2006 | US paragraph [0002], fig. 1, 2 WO EP CN | 2007/0210729 2006/054675 1835620 1951013 | A1 A1 A1 A | |
| JP | 2001-339923 | A | 07 December 2001 | US paragraphs [0006], [0007], [0147], [0166], fig. 4, 7 EP CN | 2002/0047429 1158652 1325172 | A1 A2 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011083066 A
- JP 2015072054 A

- US 20070111838 A1

**Non-patent literature cited in the description**

- **MARIKA KOBAYASHI et al.** Basic Study of PMA SynRM with Rare Earth Bonded Magnets for Automotive Drive. *2017 Kansai-section Joint Convention of Institutes of Electrical Engineering,* 110-111

- **MARIKA KOBAYASHI et al.** Basic Study of PMA SynRM with Bonded Magnets for Traction Applications. *The 2018 International Power Electronics Conference,* 2018, 2802-2807